# EUROPEAN PATENT APPLICATION

(11) **EP 2 750 083 A1**
(43) Date of publication of application: **02.07.2014**
(21) Application number: 12306679.7
(22) Date of filing: 27.12.2012
(51) Int. Cl.: G06Q 10/00, G06F 21/31

(54) **Method for protecting an electronic device against use by unauthorized persons, and associated server**

(71) Applicant: Gemalto SA, 92190 Meudon (FR)
(72) Inventor: Hugot, Didier, 92190 Meudon (FR)
(74) Representative: Afdili, Ilham

(57) **Abstract**

A method is intended for protecting an electronic device (ED) comprising a first memory means (MM1) and arranged for being coupled to a data medium (DM) comprising a second memory means (MM2). This method comprises a step (i) during which one produces a first group of data from at least one second group of data representative of personal information of a person, to be associated to the electronic device (ED), said second group of data being stored into a second memory means (MM2) of his data medium (DM), a step (ii) during which one stores the first group into the first memory means (MM1), and a step (iii) during which, each time a data medium (DM) is coupled to the electronic device (ED), the latter compares the second group with the first group and allows its use if the first group corresponds to at least some of the data of the second group, or corresponds to some of computed data of said second group.

## Description

### Technical field

The present invention relates to electronic devices or products comprising a memory means and arranged for being coupled to a data medium comprising a memory means, and more precisely to the protection of the use of such electronic devices or products.

### Background of the invention

A lot of solutions have been proposed to allow a person to be identified, but there is no simple solution for associating an electronic device to a person or a list of persons, so that only this person or these persons is/are authorized to use it. Of course it is possible to configure an electronic device so that only a person providing a predefined access code, possibly amongst several ones, could use it. But, if such an electronic device is stolen, its access code(s) can be determined by an ill-intentioned person by means of dedicated tools. Then, if, for instance, the electronic device is a stolen mobile phone with a first SIM card associated to a first person, this ill-intentioned person may replace this first SIM card with a second one to use it normally as if it was his own mobile phone.

### Summary of the invention

So, an objective of the invention is to improve the situation, and more precisely to restrict the use of an electronic device only to one or several authorized persons, notably to fight against thefts.

To this effect the invention provides notably a method, intended for protecting an electronic device comprising a first memory means and arranged for being coupled to a data medium comprising a second memory means, and comprising:
- a step (i) during which one produces a first group of data from at least one second group of data representative of personal information of a person, to be associated to the electronic device, said second group of data being stored into a second memory means of a data medium of this person,
- a step (ii) during which one stores this first group of data into the first memory means, and
- a step (iii) during which, each time a data medium is coupled to the electronic device, the latter compares the second group of data stored by the second memory means with the first group of data stored by the first memory means, in order to allow its use by a person if, and only if, this first group of data corresponds to at least some of the data of the second group, or corresponds to some of computed data of said second group.

The method according to the invention may include additional characteristics considered separately or combined, and notably:
- each personal information may be chosen from a group comprising at least a name, an address, a phone number, an e-mail address, a certificate, a secret code, a photography, and a fingerprint;
- in step (iii) the electronic device may also request chosen personal information to the person that wants to use it, and then may allow its use if the personal information provided by this person corresponds to the first and/or the second group(s) of data;
- it may further comprise a step (iv) during which a user provides additional personal information and/or modified personal information relative to at least one person to be associated to the electronic device or already associated to this electronic device, then one may produce a modified first group of data and at least one modified second group of data and/or at least one new second group of data from the provided additional personal information and/or the provided modified personal information, then one may store the modified first group of data into the first memory means and each modified second group of data and/or each new second group of data into the corresponding second memory means;
- in step (i) or (iv) personal information is provided to a server, and in step (ii) or in step (iv) this server remotely triggers the storage of the first group of data into the first memory means via a communication network;
- the electronic device may be chosen from a group comprising at least a mobile phone, a tablet, a set-top box, a residential gateway, a laptop, a personal computer, a connected television and a game console;
- the data medium may be a secure element and may be chosen from a group comprising at least a SIM card, a USIM card, a micro SD card, and a smart card.

The invention also provides a server arranged:
- for producing a first group of data from at least one second group of data representative of personal information of a person, to be associated to an electronic device comprising a first memory means and arranged for being coupled to at least one data medium, said second group of data being stored into a second memory means of a data medium of this person, and
- for triggering storage of this first group of data into the first memory means.

Such a server may be also arranged, when it receives additional personal information and/or modified personal information relative to at least one person to be associated to the electronic device or already associated to this electronic device, for producing a modified first group of data and at least one modified second group of data and/or at least one new second group of data from the provided additional personal information and/or the provided modified personal information, and for triggering storage of this modified first group of data into the first memory means and of each modified second group of data and/or each new second group of data into the corresponding second memory means.

### Brief description of the figures

Other features and advantages of the invention will become apparent on examining the detailed specifications hereafter and the appended drawings, wherein:
- figure 1 schematically and functionally illustrates an example of electronic device and a service server connected to a communication network, and
- figure 2 schematically illustrates an example of algorithm comprising sub steps implementing an embodiment of a protection method according to the invention.

### Detailed description of the preferred embodiment

The appended drawings may serve not only to complete the invention, but also to contribute to its definition, if need be.

The invention aims, notably, at offering a protection method, and an associated server SS, intended for protecting an electronic device ED against thefts and/or ill-intentioned persons.

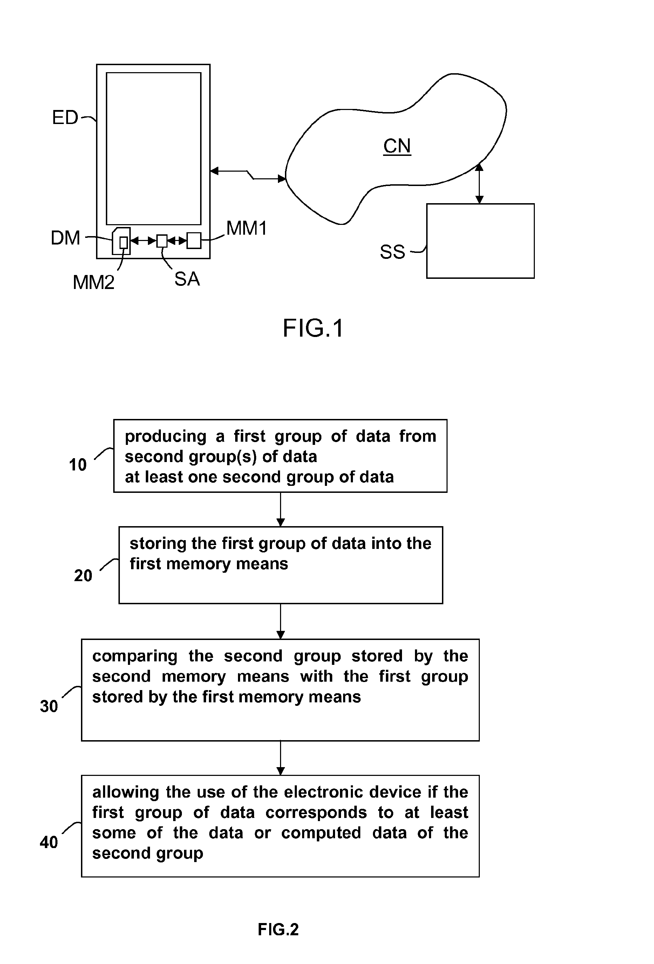

The invention concerns any electronic device ED comprising a first memory means MM1 and arranged for being coupled to at least one data medium DM of a person or user comprising a second memory means MM2, as illustrated in figure 1.

In the following description it will be considered that the electronic device ED is a smartphone. But the invention is not limited to this type of electronic device. It concerns a lot of electronic devices, portable or not, comprising a memory means, and needing to be coupled to a data medium to provide its functionalities. So, it concerns notably communication devices such as mobile phones, electronic tablets, set-top boxes, residential gateways, laptops, personal computers, connected televisions and game consoles...

Moreover, in the following description it will be considered that the data medium DM is secure element, such as a SIM card. It will be well understood that the invention is not limited to this type of data medium. Indeed, it concerns any type of medium comprising a memory means that can be read by an electronic device after having been coupled to the latter, and notably a USIM card, a smart card, a chip card, a micro SD card, or else an integrated circuit card.

In the example illustrated in figure 1 the electronic device ED comprises a communication module that is capable of establishing communications with at least one communication network CN when it is equipped with a data medium DM provided by the network operator using this communication network CN. As represented in figure 1, the communication module is able to establish a wireless communication with the network CN, and the data medium used is a SIM card.

As mentioned before, the invention proposes a protection method intended for protecting the electronic device ED, and more precisely its use, and comprising at least three main steps (i), (ii) and (iii).

A first step (i) of this protection method comprises a phase during which one produces a first group of data from at least one second group of data representative of personal information of a person, to be associated to the electronic device ED, said second group of data being stored into a second memory means MM2 of a data medium DM of this person.

This phase corresponds to the sub step 10 of the example of algorithm illustrated in figure 2.

The provision of data can be provided by the owner of the electronic device ED, for instance. The provision can be done remotely or in a local environment without a remote access. As illustrated in figure 1, the provision is carried out by means of the electronic device ED through a remote server SS that is accessible through the communication network CN and that may be an Internet or web server belonging to a network operator, for instance. It will be well understood that this is a not a limited example and indeed it could be provided either locally, directly at a Point-Of-Sales or through a local communication equipment through a wireless communication for instance a Wi-Fi one, a Bluetooth one, or a WiMAX one, or a wired communication, or through a local network, or a company network....

A second group of data can comprise any type of personal information concerning one and only one person, and notably a name, an address, a phone number, an e-mail address, a certificate, a secret code, a photography, or a fingerprint. It is important to note that a second group of data can comprise several personal information relative to the same person.

For example a data medium of a user U comprises the identity of the user U. The identity of the user U constitutes the second group of data and may comprise data representative of personal information of the user U such as a private key of the user U, a public key of the user U, his name, address, signature... The first group of data is generated from this second group of data. It can be same data than the second group of data or data computed from this second group of data. This first group of data is stored in the electronic device ED. Then the electronic device ED may for example only comprise only the public key of the user U, a digital signature computed from the personal data of the second group of the user U.

When there are N persons to be associated to the electronic device ED, then the first group of data is representative of the N second groups of data associated respectively to these N persons. So, a first group of data can be seen as a kind of identification proof token associated to an electronic device ED and therefore to N persons that are authorized to use it with their own and respective data media DM.

A second step (ii) of the protection method comprises a phase during which the first group of data is stored into the first memory means MM1 of the electronic device ED. This second step (ii) corresponds to the sub step 20 of the example of algorithm illustrated in figure 2.

When the electronic device ED is a communication equipment, the second step (ii) is remotely carried out by the server SS during a communication through the communication network CN. In this case, the server SS remotely triggers the storage of the first group of data via the communication network CN. As previously, it will be well understood that this step can be also done in a local environment, at a Point-of Sales or with a local communication equipment through a wireless or wired communication...

The first group of data is preferably stored in a secured space of the electronic device ED, such as an embedded secure element or a secure part of an applicative processor comprising the first memory means MM1, for instance. The secured space is adapted to store the first group of data, and cannot be modified by a user of this electronic device ED. It can only be stored and modified by the server SS or an entitled store.

A third step (iii) of the protection method is performed each time a data medium DM is coupled to the electronic device ED. It comprises a phase during which the electronic device ED compares the second group of data, that is stored by the second memory means MM2 of the newly coupled data medium DM, with the first group of data that is stored by the first memory means MM1 of the electronic device ED, in order to allow its use by a person if, and only if, the first group of data corresponds to at least some of the data of the second group or to some of computed data of the second group. For example when the user U inserts his data medium DM in an electronic device ED, if the first group of data which comprises the signature and the public key of the user U as stored in the electronic device, correspond to at least some of the data or computed data of the second group of the user U in the data medium, the user U is authenticated as an "authorised person", and the electronic device then allows its use with the data medium of the user U.

This third step (iii) corresponds to the sub steps 30 and 40 of the example of algorithm illustrated in figure 2.

Preferably, the secured space is an authentication module which also comprises processing means adapted to perform the third step (iii). The processing means comprises a a software application SA dedicated to the comparison of the local first group of data with the second group of data stored by the second memory means MM2 of the newly coupled data medium DM. In this case the software application is embedded into the electronic device.

In another embodiment, if the authentication module does not comprise the software application SA, it is also possible to securely download said software application SA into the electronic device ED from a remote server

Each time a step (iii) is implemented, the electronic device ED may possibly also request chosen personal information to the person that wants to use it, for control and/or authentication purpose. In this case, the electronic device ED allows its use if the personal information provided by the person corresponds to the first and/or second group(s) of data. This control and/or this authentication can be possibly performed by the software application SA, or by the software application SA and data medium DM for a mutual authentication.

The protection method according to the invention may further comprise a fourth step (iv) dedicated to modifications or updates of a first group of data, in the case where the electronic device ED is sold to someone else, or because a new person must be associated to the electronic device ED, or else because the personal information concerning a person already associated to the electronic device ED has changed.

This fourth step (iv) comprises a first phase during which a user may provide additional personal information and/or modified personal information relative to at least one person that must be associated to the electronic device ED or that is already associated to this electronic device ED.

This provision may be carried out by means of the electronic device ED through the remote server SS, or at a Point-of-Sales, or else by a local communication equipment through a wireless or wired communication. It requires preferably the agreement of the current owner of the electronic device ED for instance by means of an e-mail or a short message SMS or MMS.

This fourth step (iv) comprises further a second phase during which a modified first group of data and at least one modified second group of data and/or at least one new second group of data are produced from the provided additional personal information and/or the provided modified personal information. This second phase is preferably carried out by the remote server SS.

The fourth step (iv) comprises further a third phase during which the modified first group of data is stored into the first memory means MM1 of the electronic device D and each modified second group of data and/or each new second group of data is stored into the second memory means MM2 of the corresponding data medium DM.

The invention offers several advantages, and notably:
- it allows to restrict the use of an electronic device only to one or several authorized persons, notably to fight against thefts,
- it allows to restrict the association of an electronic device with chosen data media,
- it may allow identity controls and/or authentication processes.

The invention is not limited to the embodiments of protection method and server described above, only as examples, but it encompasses all alternative embodiments which may be considered by one skilled in the art within the scope of the claims hereafter.

## Claims

1. Method for protecting an electronic device (ED) comprising a first memory means (MM1) and arranged for being coupled to at least one data medium (DM) comprising a second memory means (MM2), **characterized in that** it comprises a step (i) during which one produces a first group of data from at least one second group of data representative of personal information of a person, to be associated to said electronic device (ED), said second group of data being stored into a second memory means (MM2) of a data medium (DM) of this person, a step (ii) during which one stores said first group of data into said first memory means (MM1), and a step (iii) during which, each time a data medium (DM) is coupled to said electronic device (ED), the latter (ED) compares said second group of data stored by said second memory means (MM2) with said first group of data stored by said first memory means (MM1), in order to allow its use by a person if, and only if, said first group of data corresponds to at least some of the data of said second group or corresponds to some of computed data of said second group.

2. Method according to claim 1, **characterized in that** said personal information is chosen from a group comprising at least a name, an address, a phone number, an e-mail address, a certificate, a secret code, a photography, and a fingerprint.

3. Method according to one of claims 1 and 2, **characterized in that** in step (iii) said electronic device (ED) also requests chosen personal information to said person that wants to use it, and then allows its use if the personal information provided by said person corresponds to said first and/or said second group(s) of data.

4. Method according to one of claims 1 to 3, **characterized in that** it further comprises a step (iv) during which a user provides additional personal information and/or modified personal information relative to at least one person to be associated to said electronic device (ED) or already associated to said electronic device (ED), then one produces a modified first group of data and at least one modified second group of data and/or at least one new second group of data from said provided additional personal information and/or said provided modified personal information, then one stores said modified first group of data into said first memory means (MM1) and each modified second group of data and/or each new second group of data into the corresponding second memory means (MM2).

5. Method according to claim 4, **characterized in that** in step (i) or in step (iv) said personal information is provided to a server (SS), and in step (ii) or in step (iv) said server (SS) remotely triggers the storage of said first group of data into said first memory means (MM1) via a communication network (CN).

6. Method according to one of claims 1 to 5, **characterized in that** said electronic device (ED) is chosen from a group comprising at least a mobile phone, a tablet, a set-top box, a residential gateway, a laptop, a personal computer, a connected television and a game console.

7. Method according to one of claims 1 to 6, **characterized in that** said data medium (DM) is a secure element chosen from a group comprising at least a SIM card, a USIM card, micro SD card, and a smart card.

8. Server (SS), **characterized in that** it is arranged i) for producing a first group of data from at least one second group of data representative of personal information of a person, to be associated to an electronic device (ED) comprising a first memory means (MM1) and arranged for being coupled to at least one data medium (DM), and stored into a second memory means (MM2) of a data medium (DM) of this person, and ii) for triggering storage of said first group of data into said first memory means (MM1).

9. Server according to claim 8, **characterized in that** it also arranged, when it receives additional personal information and/or modified personal information relative to at least one person to be associated to said electronic device (ED) or already associated to said electronic device (ED), for producing a modified first group of data and at least one modified second group of data and/or at least one new second group of data from said provided additional personal information and/or said provided modified personal information, and for triggering storage of said modified first group of data into said first memory means (MM1) and of each modified second group of data and/or each new second group of data into the corresponding second memory means (MM2).
